(19) Europäisches Patentamt
European Patent Office
Office européen des brevets

(11) **EP 4 517 582 A1**

(12) **EUROPEAN PATENT APPLICATION**

(43) Date of publication:
**05.03.2025   Bulletin 2025/10**

(21) Application number: **23306437.7**

(22) Date of filing: **30.08.2023**

(51) International Patent Classification (IPC):
***G06N 3/045*** *(2023.01)*

(52) Cooperative Patent Classification (CPC):
**G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **BULL SAS**
**78340 Les Clayes-Sous-Bois (FR)**

(72) Inventors:
• **GUEGAN MARAT, Sophie**
  **38420 REVEL (FR)**
• **PONOMAREV, Evgeniy**
  **1206 GENEVA (CH)**

(74) Representative: **IPAZ**
**Bâtiment Platon**
**Parc Les Algorithmes**
**91190 Saint-Aubin (FR)**

(54) **PRIVACY-PRESERVING FEDERATED LEARNING METHOD, ASSOCIATED COMPUTER PROGRAM AND FRAMEWORK**

(57) The invention concerns a federated learning method comprising:
- storing, in a central node (6) and in N local nodes (8), an intermediate model (40) obtained by training an object detection model based on a central training dataset;
- for each local node, obtaining a local model (42) by training the intermediate model based on a private training dataset;
- for each image of a public dataset (10), and for each local model, determining a prediction vector and an at-tention map;
- for each image of the public dataset, generating an aggregated set of outputs from the prediction vectors, and an aggregated attention map from the attention maps;
- obtaining a central model by modifying parameters of the intermediate model stored in the central node to minimize a difference between the aggregated set of outputs and an output of said intermediate model based on the public dataset as input.

**Figure 1**

## Description

## Field of the invention

The present invention relates to a method for performing privacy-preserving federated learning in the framework of object detection.

The invention further relates to a computer program and a framework.

The invention applies to the field of computer science, and more specifically to artificial intelligence for image processing.

## Background

It is known to perform federated learning, that is to say to collect knowledge from various heterogeneous sources of data (hereinafter called "local data"), generally scattered across different geographical locations, and to incorporate this knowledge into a central artificial intelligence model.

However, known methods for federated learning are not entirely satisfactory.

Indeed, such methods are generally unable to avoid data leakage when extracting knowledge from local data to teach the central artificial intelligence model. In this case, data leakage may result from either direct transfer of local data or indirect leakages, such as through sharing model parameters or gradients. In other words, such methods do not guarantee that the local data remain private, which may be a major concern in the case of, for instance, data that should always physically stay at customers' premises, such as patients' medical data.

Moreover, known methods for federated learning are not suitable for federated learning in the framework of object detection.

A purpose of the present invention is to overcome at least one of these drawbacks.

Another purpose of the invention is to provide a method suitable for privacy-preserving federated learning in the framework of object detection.

## Summary of the invention

To this end, the present invention concerns a computer-implemented method of the aforementioned type, comprising the following steps:

- training an object detection model based on a central training dataset to obtain an intermediate model;
- storing a copy of the intermediate model in a central node and in each of N local nodes, N being an integer greater than or equal to 1;
- for each local node, training the respective intermediate model based on a respective private training dataset, thereby obtaining a local model;
- for each image of a predetermined public dataset, and for each local model:

  - determining at least one corresponding prediction vector, each prediction vector defining a respective bounding box;
  - computing at least one corresponding attention map representative of a contribution of each section of the image in a detection, by the local model, of one ore more object(s) in the image;

- generating an aggregated set of outputs including, for each image of the public dataset:

  - an aggregated prediction vector obtained by aggregating the corresponding prediction vectors; and
  - at least one corresponding aggregated attention map obtained by aggregating the corresponding attention maps;

- modifying parameters of the intermediate model stored in the central node to minimize a difference between:

  - an output of said intermediate model stored in the central node based on the public dataset as input; and
  - the aggregated set of outputs,

thereby obtaining a central model.

Indeed, since each private training dataset is stored in a respective local node, and since only the outputs of the local models are shared to the central node, privacy of the data contained in each private training dataset is preserved. On the other hand, using such outputs enables an efficient knowledge transfer to the central node, and, consequently, allows to obtain a central model that is reliable.

Furthermore, the combination of prediction vectors and attention maps enables reliable and efficient knowledge distillation between local nodes with large domain gaps. The claimed method therefore allows to leverage not only the direct outputs of teachers' models (prediction vectors) but also the way these models reason when performing object detection (thanks to the attention maps).

According to other advantageous aspects of the invention, the method includes one or several of the following features, taken alone or in any technically possible combination:

for each image of the public dataset, aggregating the generated prediction vectors to obtain the aggregated prediction vector includes computing a mean of said generated prediction vectors;

for each image of the public dataset, aggregating the corresponding attention maps to obtain the at least one corresponding aggregated attention map includes:

- computing a lower bound aggregated attention map as an intersection of the corresponding attention maps;

- computing an upper bound aggregated attention map as a union of the corresponding attention maps;

for each image of the public dataset, and for each local model, computing each attention map includes implementing an Eigen-CAM algorithm or a Grad-CAM algorithm;

each prediction vector includes:

- an objectness probability representative of a probability that an object is actually present in the corresponding bounding box;
- a class probability representative of a probability that an object present in the corresponding bounding box belongs to a given class among a predetermined set of classes;

and implementing the Grad-CAM algorithm includes, for each image of the public dataset, and for each local model:

- selecting the corresponding prediction vectors that have an objectness probability that is greater than a predetermined objectness threshold;
- computing a gradient, with respect to parameters of a last convolutional layer of the local model, of a target function defined as:

$$ T = \sum_{i=1}^{i=m} I_i $$

where T is the target function,
m is the number of selected prediction vectors having an objectness probability greater than the predetermined objectness threshold,
and $I_i$ is a scalar associated with the $i^{th}$ selected prediction vector and equal to a result of multiplying the corresponding objectness probability with the highest corresponding class probability;

- for each activation map of the local model, computing a corresponding weight as:

$$ \alpha_k = \frac{1}{Z} \sum_i \sum_j \frac{\partial T}{\partial A_{ij}^k} $$

where $\alpha_k$ is the weight associated with the $k^{th}$ activation map,
Z is the number of pixels of the $k^{th}$ activation map, and
summation over i, j corresponds to global average pooling over the width and height of the $k^{th}$ activation map, and

and $A_{ij}^k$ is the pixel having coordinates (i,j) of the $k^{th}$ activation map;

- computing the attention map as:

$$ A_{map} = ReLU\left(\sum_k \alpha_k A^k\right) $$

where $A_{map}$ is the attention map for said image of the public dataset and said local model, and ReLU is a rectified linear unit function;

implementing the Eigen-CAM algorithm includes, for each image of the public dataset, and for each local model:

- forward-propagating said image through said local model up to a predetermined layer of the local model;
- factorizing an output of the predetermined layer using singular value decomposition to obtain at least one eigen vector;
- computing the corresponding attention map as a projection of the output the predetermined layer on the first obtained eigenvector;

each local model is a convolutional neural network.

According to another aspect of the same invention, it is proposed a computer program comprising instructions, which when executed by a computer, cause the computer to carry out the steps of the method as defined above.

The computer program may be in any programming language such as C, C++, JAVA, Python, etc.

The computer program may be in machine language.

The computer program may be stored, in a non-transient memory, such as a USB stick, a flash memory, a hard-disc, a processor, a programmable electronic chop, etc.

The computer program may be stored in a computerized device such as a smartphone, a tablet, a computer, a server, etc.

According to another aspect of the same invention, it is proposed a framework for performing privacy-preserving federated learning for object detection, the framework comprising a public server, a central node, and N local nodes, N being an integer greater than or equal to 1,

the public server being configured to store a predetermined public dataset, each local node being configured to:

- store a copy of an intermediate model obtained by training an object detection model based on a central training dataset;

- store a respective private training dataset;
- train the respective intermediate model based on the respective private training dataset, thereby obtaining a local model;
- for each image of the public dataset, and for each local model:

  • determine at least one corresponding prediction vector, each prediction vector defining a respective bounding box;
  • compute at least one corresponding attention map representative of a contribution of each section of the image in a detection, by the local model, of one ore more object(s) in the image;

the central node being configured to:

- store a copy of the intermediate model;
- generate an aggregated set of outputs including, for each image of the public dataset:

  • an aggregated prediction vector obtained by aggregating the corresponding prediction vectors; and
  • at least one corresponding aggregated attention map obtained by aggregating the corresponding attention maps;

- modify parameters of the intermediate model stored therein to minimize a difference between:

  • an output of said intermediate model stored therein based on the public dataset as input; and
  • the aggregated set of outputs,

thereby obtaining a central model.

Each of the central node and the local nodes may be a personal device such as a smartphone, a tablet, a smartwatch, a computer, any wearable electronic device, etc.

Each of the central node and the local nodes according to the invention may execute one or several applications to carry out the method according to the invention.

Each of the central node and the local nodes may be loaded with, and configured to execute, the computer program according to the invention.

## Brief description of the drawings

Other advantages and characteristics will become apparent on examination of the detailed description of an embodiment which is in no way limitative, and the attached figures, where:

Figure 1 is a schematic representation of a framework according to the invention; and

Figure 2 is a flowchart of a method implemented by the framework of figure 1.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures retain the same reference.

## Detailed description

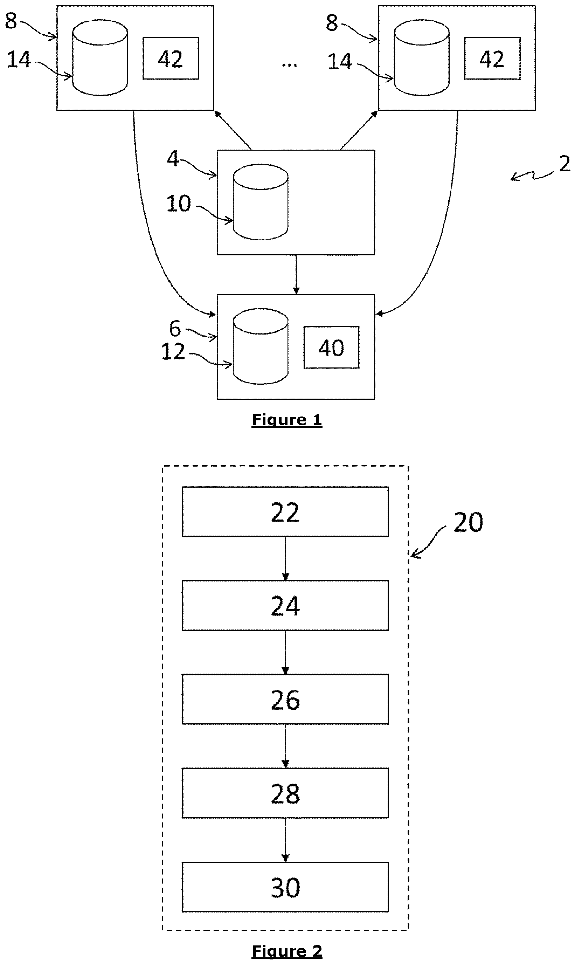

A framework 2 according to the invention is shown on figure 1.

The framework 2 is designed to perform privacy-preserving federated learning for object detection.

The framework 2 includes a public server 4, a central node 6, and N local nodes 8, N being an integer greater than or equal to 1.

The public server 4 is configured to store a public dataset 10. Moreover, the public server 4 is configured so that the central node 6 and each local node 8 can access and read the public dataset 10.

The public dataset 10 includes at least one predetermined image.

Moreover, the central node 6 may be configured to store a central training dataset 12.

The central training dataset 12 is suitable for the training of an object detection model. For instance, the central training dataset 12 includes a set of predetermined images, each image being annotated to define, for each object shown in said image, respective bounding box and class.

Alternatively, the central training dataset 12 is stored in a data storing unit (not shown) of the framework 2, distinct from the central node 6 and the local nodes 8. In this case, the data storing unit is preferably configured so that the central training dataset 12 can be accessed and read at least by the central node 6.

Furthermore, each local node 8 is configured to store a respective private training dataset 14.

Each private training dataset 14 is suitable for the training of an object detection model. For instance, each private training dataset 14 includes a set of predetermined images, each image being annotated to define, for each object shown in said image, respective bounding box and class.

For instance, each private training dataset 14 is representative of data collected from one or more source(s) associated with the respective local node 8.

Advantageously, each private training dataset 14 can only be read by the respective local node 8. This feature is advantageous, as it prevents data leakage, thereby enhancing privacy.

Preferably, the private training datasets 14 differ from one another other.

The remaining features of the framework 2 will be better understood through the description of the operation of the framework 2, provided below with reference to the figures.

The framework 2 is configured to perform a method 20, shown on figure 2.

The method 20 includes an initial training step 22, a local training step 24, an output generation step 26, an output aggregation step 28 and an optimization step 30.

Initial training step 22

During the initial training step 22, an object detection model is trained to obtain an intermediate model 40 as a result of the training.

For instance, the object detection model is a convolutional neural network. The object detection model may also be a vision transformer, or any other object detection model known to the person skilled in the art.

More specifically, the object detection model is trained based on the central training dataset 12.

Moreover, once the intermediate model 40 is obtained, a copy of the intermediate model 40 is stored in the central node 6 and in each local node 8.

Local training step 24

Then, during the local training step 24, the intermediate model 40 stored in each local node 8 is trained based on the respective private training dataset 14, resulting in a respective local model 42.

Output generation step 26

Then, during the output generation step 26, for each local node 8, a set of outputs is determined based on the public dataset 10 stored in the public server 4. Specifically, for each local node 8, the corresponding set of outputs is obtained using the respective local model 42, *i.e.,* is a result of processing the public dataset 10 by the local model 42.

More precisely, for any given local node 8, and for each image of the public dataset 10:

- the local node 8 determines at least one corresponding prediction vector, each prediction vector defining a respective bounding box; and

- the local node 8 computes at least one attention map corresponding to said image, each attention map being representative of a contribution of each section of the image in the detection of one or more object(s) in the image by the local model 42.

For instance, each prediction vector is an output of the local model 42, an output of a predetermined layer of the local model 42, or even a result of applying a predetermined function to an output of one or more predetermined layer(s) of the local model 42.

Preferably, each prediction vector includes coordinates of the respective bounding box, an objectness probability $P_{obj}$, and class probabilities $P_{CL1}$, $P_{CL2}$, ..., $P_{CLn}$.

Objectness probability is representative of a probability that an object is actually present in the corresponding bounding box.

Furthermore, class probability is representative of a probability that an object present in the bounding box belongs to a given class among a predetermined set of classes.

Preferably, for each local model 42, the respective local node 8 computes, for each image of the public dataset 10, each corresponding attention map by implementing an Eigen-CAM algorithm or a Grad-CAM algorithm.

More precisely, in the case where the local node 8 is configured to implement the Grad-CAM algorithm, then, for any given image of the public dataset 10, in order to compute the attention map, the local node 8 selects the corresponding prediction vectors that have an objectness probability $P_{obj}$ that is greater than a predetermined objectness threshold $P_{min}$.

Then, the local node 8 computes a gradient of a target function T, with respect to parameters of a last convolutional layer of the local model 42.

The target function T is defined as:

$$T = \sum_{i=1}^{i=m} l_i$$

where m is the number of selected prediction vectors, *i.e.*, the number of prediction vectors that fulfill the aforementioned objectness probability requirement (*i.e.*, $P_{obj} \geq P_{min}$); and
and $l_i$ is a scalar associated with the $i^{th}$ selected prediction vector, and equal to a result of multiplying the objectness probability $P_{obj}$ of said selected prediction vector with the highest corresponding class probability $P_{CL1}$, $P_{CL2}$, ..., $P_{CLn}$.

Then, the local node 8 computes a weight for each activation map of the local model 42, as:

$$\alpha_k = \frac{1}{Z} \sum_i \sum_j \frac{\partial T}{\partial A_{ij}^k}$$

where $\alpha_k$ is the weight associated with the $k^{th}$ activation map of the local model 42,

Z is the number of pixels of the $k^{th}$ activation map, and

summation over i, j corresponds to global average pooling over the width and height of the $k^{th}$ activation map, and

and $A_{ij}^k$ is the pixel having coordinates (i,j) of the $k^{th}$ activation map.

By "$k^{th}$ activation map of a computer vision model", it is meant, in the context of the present invention, a 2-dimensional map obtained by forward propagation of an input image throughout the computer vision model up to the $k^{th}$ layer.

Then, the local node 8 computes the attention map as

$$A_{map} = ReLU\left(\sum_k \alpha_k A^k\right)$$

where $A_{map}$ is the attention map for said image of the public dataset 10 and said local model 42, and ReLU is a rectified linear unit function.

Alternatively, in the case where the local node 8 is configured to implement the Eigen-CAM algorithm, then, for any given image of the public dataset 10, in order to compute the attention map, the local node 8 forward propagates said image through the corresponding local model 42 up to a layer of interest N. Then, the local node 8 further factorizes an output of layer N using singular value decomposition to obtain eigen vectors and eigen values.

In this case, the local model 42 is preferably a convolutional neural network. More precisely, after local training 24 based on the respective private training dataset 14, the obtained local model 42 is used in inference mode to generate a feature map corresponding to the layer of interest N, which is then further factorized with singular value decomposition.

Then, the local node 8 computes the corresponding attention map as a projection of the output layer N on the first eigenvector.

Output aggregation step 28

Then, during the output aggregation step 28, the sets of outputs generated by each local node 8 for each image of the public dataset 10 are transferred to the central node 6 for processing.

Then, for each image of the public dataset 10, the central node 6 generates a corresponding aggregated set of outputs.

More precisely, for each image of the public dataset 10, the aggregated set of outputs includes:

- an aggregated prediction vector obtained by aggregating the corresponding prediction vectors determined by the local nodes 8; and
- at least one corresponding aggregated attention map obtained by aggregating the attention map computed for said image by the local nodes 8.

Preferably, for each image of the public dataset 10, in order to aggregate the corresponding prediction vectors so as to obtain the aggregated prediction vector, the central node 6 computes a mean of said prediction vectors.

Alternatively, or in addition, for each image of the public dataset 10, in order to aggregate the corresponding attention maps so as to obtain the aggregated attention map, the central node 6 computes:

- a lower bound aggregated attention map as an intersection of the corresponding attention maps;
- an upper bound aggregated attention map as a union of the corresponding attention maps.

Optimization step 30

Then, during the optimization step 30, the central node 6 modifies parameters of the intermediate model 40 stored in said central node 6 to obtain a central model.

More precisely, to obtain the central model, the local node 6 modifies parameters of the intermediate model 40 to minimize a difference between:

- an output of the intermediate model 40 stored in the central node 6, based on the public dataset 10 as input; and
- the aggregated set of outputs generated during the output aggregation step 28.

More precisely, the local node 6 is configured to use the lower and upper bound aggregated attention maps to train the intermediate 40 model in such a way that encourages pixels in the output of the intermediate model 40 to get activated inside the lower bound (intersection) and penalizes their activation outside the upper bound (union).

Preferably, to obtain the central model, the central node 6 is configured to perform a gradient descent method.

Of course, the invention is not limited to the examples detailed above.

## Claims

1. A computer-implemented method (20) for performing privacy-preserving federated learning in the framework of object detection, the method comprising the following steps:

    - training (22) an object detection model based on a central training dataset (12) to obtain an intermediate model (40);
    - storing a copy of the intermediate model (40) in a central node (6) and in each of N local nodes (8), N being an integer greater than or equal to 1;
    - for each local node (8), training (24) the respective intermediate model (40) based on a respective private training dataset (14), thereby obtaining a local model (42);
    - for each image of a predetermined public dataset (10), and for each local model (42):

        • determining at least one corresponding prediction vector, each prediction vector defining a respective bounding box;
        • computing at least one corresponding attention map representative of a contribution of each section of the image in a detection, by the local model (42), of one ore more object(s) in the image;

    - generating (28) an aggregated set of outputs including, for each image of the public dataset (10):

        • an aggregated prediction vector obtained by aggregating the corresponding prediction vectors; and
        • at least one corresponding aggregated attention map obtained by aggregating the corresponding attention maps;

    - modifying (30) parameters of the intermediate model (40) stored in the central node (6) to minimize a difference between:

        • an output of said intermediate model (40) stored in the central node (6) based on the public dataset (10) as input; and
        • the aggregated set of outputs,

    thereby obtaining a central model.

2. The method (20) according to claim 1, wherein, for each image of the public dataset, aggregating the generated prediction vectors to obtain the aggregated prediction vector includes computing a mean of said generated prediction vectors.

3. The method (20) according to claim 1 or 2, wherein for each image of the public dataset, aggregating the corresponding attention maps to obtain the at least one corresponding aggregated attention map includes:

    - computing a lower bound aggregated attention map as an intersection of the corresponding attention maps;
    - computing an upper bound aggregated attention map as a union of the corresponding attention maps.

4. The method (20) according to any one of the claims 1 to 3, wherein, for each image of the public dataset, and for each local model, computing each attention map includes implementing an Eigen-CAM algorithm or a Grad-CAM algorithm.

5. The method (20) according to claim 4, wherein each prediction vector includes:

    - an objectness probability representative of a probability that an object is actually present in the corresponding bounding box;
    - a class probability representative of a probability that an object present in the corresponding bounding box belongs to a given class among a predetermined set of classes;

and wherein implementing the Grad-CAM algorithm includes, for each image of the public dataset, and for each local model:

    - selecting the corresponding prediction vectors that have an objectness probability that is greater than a predetermined objectness threshold;
    - computing a gradient, with respect to parameters of a last convolutional layer of the local model, of a target function defined as:

$$T = \sum_{i=1}^{i=m} l_i$$

    where T is the target function,
    m is the number of selected prediction vectors having an objectness probability greater than the predetermined objectness threshold,
    and $l_i$ is a scalar associated with the $i^{th}$ selected prediction vector and equal to a result of multiplying the corresponding objectness probability with the highest corresponding class probability;

    - for each activation map of the local model, computing a corresponding weight as:

$$a_k = \frac{1}{Z} \sum_i \sum_j \frac{\partial T}{\partial A_{ij}^k}$$

where $\alpha_k$ is the weight associated with the $k^{th}$ activation map,

$Z$ is the number of pixels of the $k^{th}$ activation map, and summation over i, j corresponds to global average pooling over the width and height of the $k^{th}$ activation map, and

and $A_{ij}^k$ is the pixel having coordinates (i,j) of the $k^{th}$ activation map;

- computing the attention map as:

$$A_{map} = ReLU\left(\sum_k a_k A^k\right)$$

where $A_{map}$ is the attention map for said image of the public dataset and said local model, and
ReLU is a rectified linear unit function.

6. The method (20) according to claim 4, wherein implementing the Eigen-CAM algorithm includes, for each image of the public dataset, and for each local model:

- forward-propagating said image through said local model up to a predetermined layer of said local model;
- factorizing an output of the predetermined layer using singular value decomposition to obtain at least one eigen vector;
- computing the corresponding attention map as a projection of the output the predetermined layer on the first obtained eigenvector.

7. The method (20) according to claim 6, wherein each local model is a convolutional neural network.

8. Computer program comprising instructions, which when executed by a computer, cause the computer to carry out the steps of the method according to any one of claims 1 to 7.

9. A framework (2) for performing privacy-preserving federated learning for object detection, the framework comprising a public server (4), a central node (6), and N local nodes (8), N being an integer greater than or equal to 1, the public server (4) being configured to store a predetermined public dataset (10),

each local node (6) being configured to:

- store a copy of an intermediate model (40) obtained by training an object detection model based on a central training dataset (12);
- store a respective private training dataset (14);
- train the respective intermediate model based on the respective private training dataset (14), thereby obtaining a local model (42);
- for each image of the public dataset (10), and for each local model (42):

  • determine at least one corresponding prediction vector, each prediction vector defining a respective bounding box;
  • compute at least one corresponding attention map representative of a contribution of each section of the image in a detection, by the local model, of one ore more object(s) in the image;

the central node (6) being configured to:

- store a copy of the intermediate model (40);
- generate an aggregated set of outputs including, for each image of the public dataset (10):

  • an aggregated prediction vector obtained by aggregating the corresponding prediction vectors; and
  • at least one corresponding aggregated attention map obtained by aggregating the corresponding attention maps;

- modify parameters of the intermediate model (40) stored therein to minimize a difference between:

  • an output of said intermediate model (40) stored therein based on the public dataset (10) as input; and
  • the aggregated set of outputs,

thereby obtaining a central model.

**Figure 1**

**Figure 2**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/287392 A1 (GOOGLE LLC [US]; QI HANG [US] ET AL.) 19 January 2023 (2023-01-19) * paragraphs [0001] - [0090] * | 1-9 | INV. G06N3/045 |
| A | US 2022/157054 A1 (LIN ZHE [US] ET AL) 19 May 2022 (2022-05-19) * paragraph [0020] - paragraph [0085] * | 1-9 | |
| A | HU LI ET AL: "MHAT: An efficient model-heterogenous aggregation training scheme for federated learning", INFORMATION SCIENCES, ELSEVIER, AMSTERDAM, NL, vol. 560, 2 February 2021 (2021-02-02), pages 493-503, XP086541854, ISSN: 0020-0255, DOI: 10.1016/J.INS.2021.01.046 [retrieved on 2021-02-02] * the whole document * | 1-9 | |
| A | US 2018/330238 A1 (LUCIW MATTHEW [US] ET AL) 15 November 2018 (2018-11-15) * paragraphs [0002] - [0107] * | 1-9 | **TECHNICAL FIELDS SEARCHED (IPC)** G06N |

The present search report has been drawn up for all claims

| Place of search | Date of completion of the search | Examiner |
|---|---|---|
| The Hague | 15 February 2024 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 6437

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2024

| Patent document cited in search report | | | Publication date | Patent family member(s) | | Publication date |
|---|---|---|---|---|---|---|
| WO 2023287392 | A1 | | 19-01-2023 | EP | 4295270 A1 | 27-12-2023 |
| | | | | WO | 2023287392 A1 | 19-01-2023 |
| US 2022157054 | A1 | | 19-05-2022 | AU | 2019222819 A1 | 04-06-2020 |
| | | | | CN | 111178123 A | 19-05-2020 |
| | | | | DE | 102019005851 A1 | 14-05-2020 |
| | | | | GB | 2578950 A | 03-06-2020 |
| | | | | US | 2020151448 A1 | 14-05-2020 |
| | | | | US | 2020272822 A1 | 27-08-2020 |
| | | | | US | 2022157054 A1 | 19-05-2022 |
| US 2018330238 | A1 | | 15-11-2018 | CA | 3061767 A1 | 15-11-2018 |
| | | | | CN | 110914836 A | 24-03-2020 |
| | | | | EP | 3622438 A1 | 18-03-2020 |
| | | | | JP | 7317717 B2 | 31-07-2023 |
| | | | | JP | 2020520007 A | 02-07-2020 |
| | | | | JP | 2023156308 A | 24-10-2023 |
| | | | | KR | 20200028330 A | 16-03-2020 |
| | | | | US | 2018330238 A1 | 15-11-2018 |
| | | | | WO | 2018208939 A1 | 15-11-2018 |

EPO FORM P0459

For more details about this annex : see Official Journal of the European Patent Office, No. 12/82